(19) Europäisches Patentamt
European Patent Office
Office européen des brevets

(11) **EP 2 531 744 B1**

(12) **EUROPEAN PATENT SPECIFICATION**

(45) Date of publication and mention
of the grant of the patent:
**01.11.2017 Bulletin 2017/44**

(21) Application number: **11705648.1**

(22) Date of filing: **07.02.2011**

(51) Int Cl.:
*F16F 9/504* (2006.01)      *F16F 9/512* (2006.01)
*F16F 9/53* (2006.01)      *F16F 13/00* (2006.01)
*F16F 9/19* (2006.01)      *F16F 9/34* (2006.01)
*F16F 7/10* (2006.01)      *F16F 9/32* (2006.01)

(86) International application number:
**PCT/GB2011/000160**

(87) International publication number:
**WO 2011/095787 (11.08.2011 Gazette 2011/32)**

(54) **DAMPING AND INERTIAL HYDRAULIC DEVICE**

DÄMPFENDE UND INERTE HYDRAULISCHE VORRICHTUNG

DISPOSITIF HYDRAULIQUE D'AMORTISSEMENT ET D'INERTIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2010 US 301891 P**

(43) Date of publication of application:
**12.12.2012 Bulletin 2012/50**

(73) Proprietors:
• **Cambridge Enterprise Limited
Cambridge CB2 1TN (GB)**
• **Penske Racing Shocks Inc
Reading, PA 19602 (US)**

(72) Inventors:
• **GARTNER, Bill
Reading, PA 19602 (US)**

• **SMITH, Malcolm
Cambridge CB3 OGT (GB)**

(74) Representative: **Gill Jennings & Every LLP
The Broadgate Tower
20 Primrose Street
London EC2A 2ES (GB)**

(56) References cited:
**EP-A1- 0 382 171      EP-A2- 2 060 823
WO-A1-03/005142      WO-A1-2011/015828
DE-C1- 19 834 316      JP-A- H11 108 099
JP-A- 2007 205 433      US-A- 2 670 812
US-A- 4 425 836      US-A- 5 018 606
US-A- 5 161 653      US-A- 5 161 653
US-A- 5 568 847**

**EP 2 531 744 B1**

**Description**

This invention relates to an integrated damping and inertial device for controlling mechanical forces such as vibrational forces.

Force-controlling devices are present in a number of applications and are used for example in vehicle suspension systems. An example mechanical device is disclosed in US 7316303B (the "inerter") and provides a component for building a suspension system with any desired mechanical impedance. This device can include a linear to rotary transducer, connected to a flywheel. Several variations of this device have been proposed, some including for example the use of ball screws or racks and pinions.

One disadvantage of all of these is that there is a considerable number of moving parts.

To address the above problem, force-controlling hydraulic devices have been proposed, wherein the number of moving parts is greatly reduced and tractability in production is increased. The force-controlling hydraulic devices can include a cylinder for containing a liquid, the cylinder being attached to one terminal; and a piston attached to another terminal and movable within the cylinder such that the movement of the piston causes the liquid flow along a flow path, such as a helical path. The moving liquid acts as storage for kinetic energy and generates an inertial force due to the mass of the liquid that controls the mechanical forces at the terminals such that they are substantially proportional to the relative acceleration between the terminals.

Some of the methods described in US 7316303B to construct an arbitrary passive mechanical impedance include the interconnection of devices together with springs and dampers in a variety of circuit arrangements.

DE 19834316C discloses a damping device with channel and valve arrangements.

EP2060823 discloses a device for controlling mechanical forces.

According to the present invention there is provided a device for use in the control of mechanical forces, the device comprising: first and second terminals for connection, in use, to components in a system for controlling mechanical forces and independently moveable; and hydraulic means connected between the terminals and containing a liquid, the hydraulic means configured, in use, to produce upon relative movement of the terminals, a liquid flow along at least two flow paths; wherein the liquid flow along a first flow path generates a damping force proportional to the velocity of the liquid flow along the first flow path; and the liquid flow along a second flow path generates an inertial force due to the mass of the liquid, the force being proportional to the acceleration of the liquid flow along the second flow path; such that the damping force is equal to the inertial force to provide an inerter in series with a damper and controls in use, the mechanical forces at the terminals wherein the hydraulic means further comprises: a housing defining a chamber for containing the liquid, the housing being attached to one of the terminals; and a piston attached to the other terminal and movable within the chamber such that the movement of the piston causes the liquid to flow along the first flow path and the second flow path.

The present invention provides a device in which the inerter is implemented using a fluid, so that the number of moving parts is greatly reduced, and at the same time the integration with other passive circuit elements into a single unit is made possible. The arrangement is an inerter in series with a damper.

The present invention enables fluid flow control, which provides a convenient method to achieve adjustability of the device.

Examples of various embodiments of the present invention will now be described with reference to the accompanying drawings, in which:

Figure 1 is a schematic view of a force-controlling hydraulic device according to one embodiment of the present invention;
Figure 2 is a schematic view of another force-controlling hydraulic device;
Figure 3 shows the pressure drop across the device of Figure 1 as a function of (constant) piston velocity;
Figure 4 shows the damping force on the piston of the device of Figure 1 as a function of (constant) piston velocity;
Figure 5 shows a fluid inerter according to another embodiment of the present invention with helix in piston and through-rod in partial cutaway view;
Figure 6 shows a fluid inerter according to another embodiment of the present invention with helix in piston and pressurised gas reservoir in partial cutaway view;
Figure 7 shows a series inerter-damper according to an example in which the inerter is provided by means of an external helical path and the series damper is provided by damping means involving the fluid passing through an orifice within the piston;
Figure 8 represents the equivalent circuit of the device shown in Figure 7;
Figure 9 shows a side elevational cross-sectional view of a series damper-inerter example, designed as a twin-tube arrangement for construction of the external helical path and shaft mounted piston, with a through-rod;
Figures 10 and 11 show external perspective views of helical inserts for the device shown in Figure 9;
Figure 12 shows a side elevational cross-sectional view of a series damper-inerter according to another example, designed as a twin-tube arrangement for construction of the external helical path and shaft mounted piston, and pressurised gas reservoir;

Figure 13 shows a side elevational cross-sectional view of a series damper-inerter example, designed as a twin-tube arrangement for the external helix, shaft mounted piston, a through-rod, and with a two-way damping piston added in line with the helical fluid path to modify the parasitic damping characteristic of the helical path;

Figure 14 shows a series damper inerter according to another example in parallel with a damper;

Figure 15 represents the equivalent circuit of the device shown in Figure 14;

Figure 16 shows a series damper inerter according to another example in parallel with an inerter;

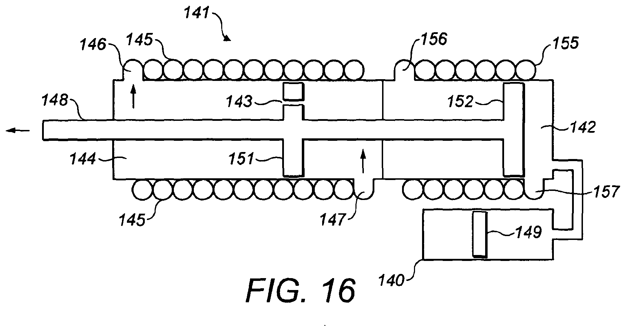

Figure 15 represents the equivalent circuit of the device shown in Figure 16; Figure 18 shows a series damper inerter according to another example in parallel with a series connection of a spring damper and inerter;

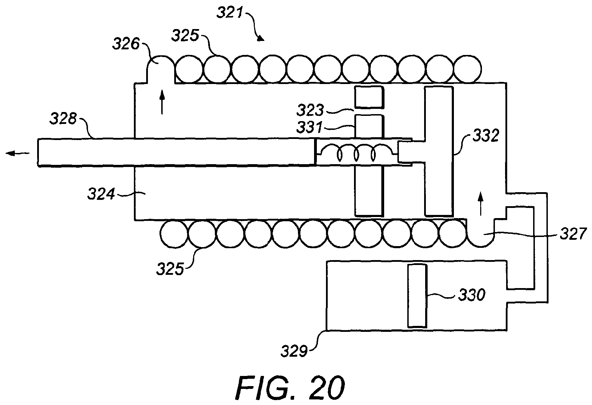

Figure 19 represents the equivalent circuit of the device shown in Figure 18; Figure 20 shows an inerter in series with a parallel spring-damper according to another example;

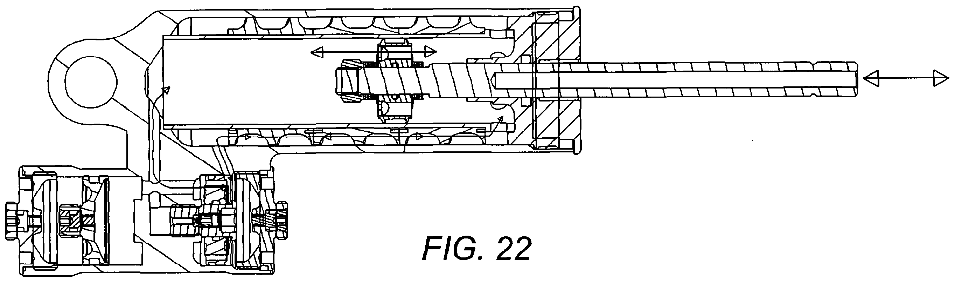

Figure 21 represents the equivalent circuit of the device shown in Figure 20; Figure 22 represents a side elevational cross-sectional view of a series damper-inerter according to the present invention, designed as a twin-tube arrangement for the external helix, shaft mounted piston, pressurised gas reservoir, and with a through bidirectional piston to control flow in series with inertial flow;

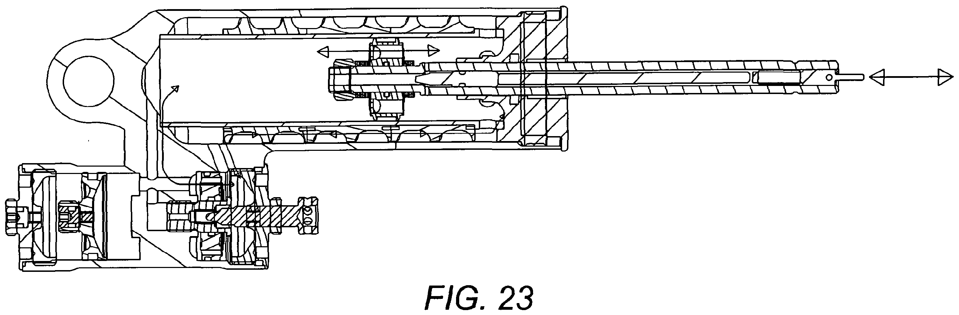

Figure 23 represents a side elevational cross-sectional view of a series damper-inerter according to the present invention, designed as a twin-tube arrangement for the external helix, shaft mounted piston, pressurised gas reservoir, with a through bi-directional piston for controlling flow in series with inertial flow and external adjusters used to control the flow in the damping and inertial paths, respectively; and

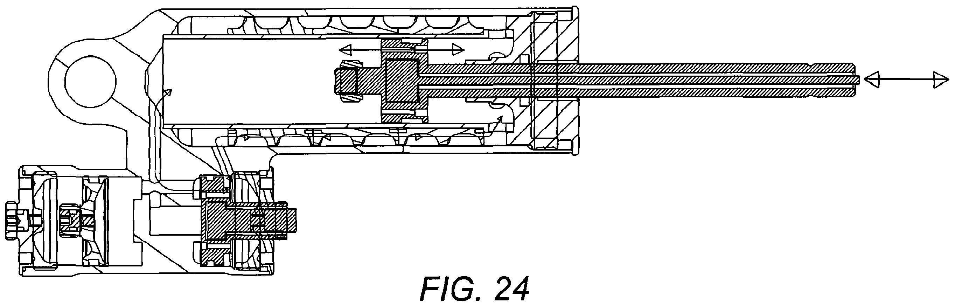

Figure 24 represents a side elevational cross-sectional view of a series damper-inerter according to the present invention, designed as a twin-tube arrangement for the external helix, shaft mounted piston, pressurised gas reservoir, and a computer controlled flow valve or magnetic filed generator for controlling magnetorheological fluid.

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates. At least one embodiment of the present invention will be described and shown, and this application may show and/or describe other embodiments of the present invention. It is understood that any reference to "the invention" is a reference to an embodiment of a family of inventions, with no single embodiment including an apparatus, process, or composition that should be included in all embodiments, unless otherwise stated. Further, although there may be discussion with regards to "advantages" provided by some embodiments of the present invention, it is understood that yet other embodiments may not include those same advantages, or may include yet different advantages. Any advantages described herein are not to be construed as limiting to any of the claims.

Although various specific quantities (spatial dimensions, temperatures, pressures, times, force, resistance, current, voltage, concentrations, wavelengths, frequencies, heat transfer coefficients, dimensionless parameters, etc.) may be stated herein, such specific quantities are presented as examples only, and further, unless otherwise noted, are approximate values, and should be considered as if the word "about" prefaced each quantity. Further, with discussion pertaining to a specific composition of matter, that description is by example only, and does not limit the applicability of other species of that composition, nor does it limit the applicability of other compositions unrelated to the cited composition.

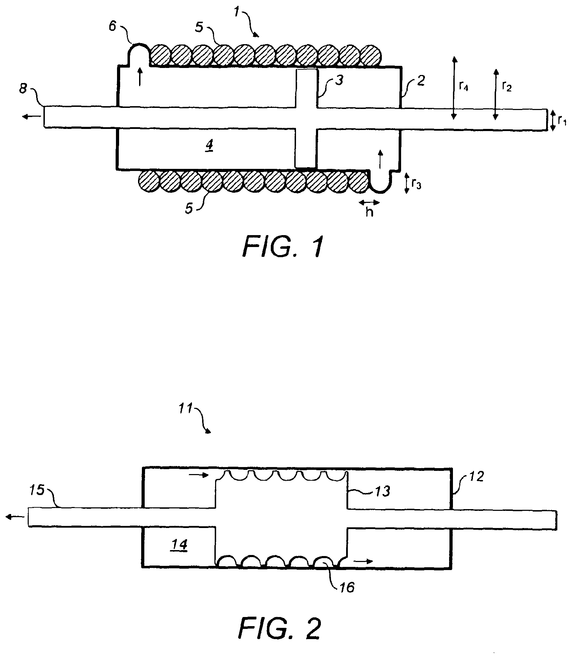

Prototypes of hydraulic force-controlling devices have been built and tested. These include one provided with a coil external to the cylinder as in Figure 1 and using water as fluid, and another provided with an internal helical path shaped in the piston itself as shown in Figure 2 and using hydraulic fluid.

Figure 1 illustrates an example of a force-controlling hydraulic device 1. The device 1 comprises hydraulic means including independently movable terminals, which in this example, may be respectively included in a cylinder 2 and a piston 3 movable within the cylinder. A liquid 4 is contained within the cylinder 2. The device further comprises a helical tube 5 located outside the cylinder 2 creating a sealed path for the liquid to flow out and back into the cylinder 2 via two orifices (6, 7). The hydraulic means are configured to produce, upon relative movement of its terminals a liquid flow. Movement of the piston 3 causes liquid 4 to flow through helical tube 5 which generates an inertial force due to the moving mass of the liquid 4. The cylinder 2 may include one terminal, and the piston 3 may include another terminal. As will be explained below, the inertial force due to a moving mass of liquid caused by relative movement between the terminals controls the mechanical forces at the terminals such that they are substantially proportional to the relative acceleration between the terminals.

The motion of the piston 3 may be restricted by devices such as spring buffers (not shown). Such means may provide a useful safety feature to protect the device if large forces or velocities were generated at the limits of travel of the piston.

The device of Figure 1 is implemented using a through-rod 8. Alternatives using a single rod with a floating piston or a double tube or other similar arrangements are equally feasible. It will be appreciated that alternative configurations for the hydraulic means are equally feasible with more specific embodiments being described below. Means to pressurise the fluid (not shown) are envisaged.

Figure 2 illustrates another example of a force-controlling hydraulic device 11 according to the present invention. The device 11 comprises a cylinder 12, a piston 13 movable within the cylinder, and a liquid 14 within the cylinder 12. The outer surface of the piston 13 has a helical channel, such that, when inserted inside the cylinder 12, a helical path 16 is formed between the piston 13 and the cylinder 12. Movement of the piston 13 causes liquid 14 to flow through helical path 16 which generates an inertial force due to the moving mass of the liquid 14 inside the cylinder 12. In the example of Figure 2 the helical path 16 has a cross-section which is a semi-disc which is convenient for machining. Other cross-sectional shapes may also be employed with advantage to control the damping characteristics of the device. The example of Figure 2 is implemented using a through-rod 15.

In the example shown in Figure 1 , the characteristic parameters of device 1 , namely the constant of proportionality with which the applied force at the terminals is related to the relative acceleration between the terminals, can be varied by altering values such as the radii of the piston, cylinder, and helical tube, the length of the cylinder, and liquid density. The effect of such parameters will be detailed below.

Consider the arrangement shown in Figure 1, where $r_1$ is the radius of the piston, $r_2$ is the inner radius of the cylinder, $r_3$ is the inner radius of the helical tube, $r_4$ is the radius of the helix, h is the pitch of the helix, n is the number of turns in the helix, L is the inner length of the cylinder, and $\rho$ is the liquid density. Further,

$A_1 = \pi(r_2^2 - r_1^2)$ is the cross-sectional area of the cylinder, and

$A_2 = \pi r_3^2$ is the cross-sectional area of the tube.

The total mass of liquid in the helical tube is approximately equal to:

$$\rho n \pi r_3^2 \sqrt{h^2 + (2\pi r_4)^2} =: m_{hel.} \tag{1}$$

The total mass of liquid in the cylinder is approximately equal to:

$$\rho \pi (r_2^2 - r_1^2) L =: m_{cyl.} \tag{2}$$

If the piston is subject to a linear displacement equal to $x$, then a fluid element in the helical tube may expect an angular displacement $\theta$ rads) approximately equal to:

$$\frac{2\pi x (r_2^2 - r_1^2)}{r3^2 \sqrt{h^2 + (2\pi r_4)^2}} . \tag{3}$$

The moment of inertia of the total liquid mass in the helical tube about the axis of the piston is approximately equal to $m_{hel} r_4^2 =: J.$ Now suppose that device 1 has an ideal behaviour with b representing the proportionality constant wherein the generated inertial force between the terminals is proportional to the relative acceleration between the terminals. Then we would expect:

$$\frac{1}{2} b \dot{x}^2 = \frac{1}{2} J \dot{\theta}^2 \tag{4}$$

which gives

$$b = \frac{m_{hel}}{1+(h/(2\pi r_4))^2} \frac{(r_2^2 - r_1^2)^2}{r_3^4} = \frac{m_{hel}}{1+(h/(2\pi r_4))^2} \left(\frac{A_1}{A_2}\right)^2 \tag{5}$$

Let $m_{tot} = m_{hel} + m_{cyl}$ for the total liquid mass. Exemplary values are tabulated below for two different liquids used in the embodiment shown in Figure 1. In the following examples we assume $r_4 = r_2 + r_3$, $h = 2r_3$ and $L = nh$. We also take the outside diameter (OD) of the device equal to $2(r_4 + r_3)$.

Table 1. A synthetic oil with $\rho$= 1200 kg m$^{-3}$.

| $r_1(mm)$ | $r_2(mm)$ | $r_3(mm)$ | $n$ | OD $(mm)$ | $L(mm)$ | $m_{hel}(kg)$ | $m_{cyl}(kg)$ | $m_{tot}(kg)$ | $b(kg)$ |
|---|---|---|---|---|---|---|---|---|---|
| 6 | 30 | 3 | 15 | 72 | 90 | 0.106 | 0.293 | 0.399 | 972.1 |
| 6 | 25 | 3 | 20 | 62 | 120 | 0.119 | 0.267 | 0.386 | 511.0 |
| 6 | 30 | 6 | 10 | 84 | 120 | 0.307 | 0.391 | 0.698 | 176.6 |
| 6 | 20 | 4 | 20 | 56 | 160 | 0.182 | 0.220 | 0.402 | 94.0 |
| 6 | 24 | 5 | 10 | 68 | 100 | 0.172 | 0.204 | 0.376 | 80.0 |
| 6 | 20 | 4 | 12 | 56 | 96 | 0.109 | 0.132 | 0.241 | 56.4 |

Table 2. Mercury with $\rho$= 13579 kg m$^{-3}$.

| $r_1(mm)$ | $r_2(mm)$ | $r_3(mm)$ | $n$ | OD $(mm)$ | $L(mm)$ | $m_{hel}(kg)$ | $m_{cyl}(kg)$ | $m_{tot}(kg)$ | $b(kg)$ |
|---|---|---|---|---|---|---|---|---|---|
| 6 | 20 | 4 | 12 | 56 | 96 | 1.24 | 1.49 | 2.73 | 638.4 |
| 5 | 15 | 3 | 20 | 42 | 120 | 0.87 | 1.02 | 1.89 | 428.3 |
| 5 | 10 | 2 | 30 | 28 | 120 | 0.39 | 0.38 | 0.77 | 135.5 |
| 5 | 7 | 1 | 60 | 18 | 120 | 0.13 | 0.12 | 0.25 | 74.0 |

As shown in Tables 1 and 2, the modelling and testing work demonstrated that the produced inertance effect (force proportional to acceleration) could be sufficiently large (the proportionality constant b is greater than 50 kg). Such effect would be needed where the device is placed in parallel with a spring and damper.

Furthermore, the modelling and testing demonstrated that the viscosity of the liquid provides a departure from ideal behaviour. A further parasitic element might be provided by the compressibility of the fluid which might be modelled as a spring in series with the two parallel elements.

In US 7316303B, an ideal device is defined (i.e. the force proportional to relative acceleration) and deviations caused by friction, backlash etc. are regarded as parasitics which can be made as small as needed. In the case of the present invention however, the non-linear damping caused by liquid viscosity is intrinsic, and will cause a deviation from ideal behaviour at large piston velocities.

The non-linear damping of the present invention is "progressive", namely the force increases with a relative velocity at a faster rate than linear. Practical dampers in automotive applications are often regressive, namely the force increases with a relative velocity at a slower rate than linear. Even when using ordinary liquids such as hydraulic fluids, the device according to the present invention can be configured to display an ideal behaviour, using adjusting means. For example, shim packs or valving arrangement at the orifices 6, 7 could be employed to achieve a more linear damping characteristic, although this would leave a non-negligible parallel damper. This has the potential to create a convenient integrated device with the behaviour of an ideal device according to the present with a linear damper in parallel. In other circumstances it may be advantageous not to correct for the viscosity effect.

The following details the effects of damping. Let $u$ be the mean velocity of fluid in the helical tube, $\Delta p$ the pressure drop across the piston, $\mu$ the liquid viscosity, and $l$ the length of the helical tube, where

$$l = n\sqrt{(h^2 + (2\pi r_4)^2} \tag{6}$$

We will now calculate the pressure drop $\Delta p$ across the main piston required to maintain a flow in the tube of mean velocity *u*. This will allow the steady force required to maintain a piston relative velocity $\dot{x}$ to be calculated, and hence a damping coefficient. Given that $A_1\dot{x} = A_2u$, the Reynolds Number (Re) for the tube is equal to

$$(\text{Re}) = \frac{2\rho r_3}{\mu}u = \frac{2\rho r_3 A_1}{\mu A_2}\dot{x} \tag{7}$$

with transition from laminar to turbulent flow occurring around (Re) = 2 x $10^3$. Assuming that *u* is small enough so that laminar flow holds, and using the Hagen-Poiseuille formula for a straight tube gives:

$$u = \frac{r_3^2}{8\mu}\frac{\Delta p}{l} \tag{8}$$

The force on the piston required to maintain a steady relative velocity $\dot{x}$ is equal to $\Delta pA_1$. This suggests a linear damping rate coefficient equal to:

$$c = \frac{\Delta pA_1}{\dot{x}} = \frac{\Delta pA_1^2}{A_2 u} = \left(\frac{A_1}{A_2}\right)^2 8\pi\mu l. \tag{9}$$

The pressure drop needed to maintain a turbulent flow, according to Darcy's formula is:

$$\Delta p = \frac{l}{r_3}f\rho u^2, \tag{10}$$

where *f* is a dimensionless *friction factor.* For a smooth pipe the empirical formula of Blasius is:

$$f = 0.079(\text{Re})^{-1/4}. \tag{11}$$

This gives the following expression for the constant force on the piston required to maintain a steady velocity:

$$F = \Delta p\ A_1$$

$$= 0.0664\mu^{0.25}\rho^{0.75}\frac{lA_1}{(r_3)^{1.25}}u^{1.75}$$

$$= 0.664\mu^{0.25}\rho^{0.75}\frac{lA_1}{r_3^{1.25}}\left(\frac{A_1}{A_2}\right)^{1.75}(\dot{x})^{1.75} =: c_1(\dot{x})^{1.75} \tag{12}$$

Let the fluid be water with $\rho$ = 100 kg m$^{-3}$, $\mu$ = 10$^{-3}$ Pa s. Take *l* = 7 m, r$_1$ = 8 mm, r$_2$= 20 mm, r$_3$ = 4 mm, L = 300 mm. This results in a device with:

$m_{hel}$ = 0.352 kg,
$m_{cyl}$ = 0.317 kg, and
$b$ = 155 kg.

The transition to turbulent flow occurs at a piston velocity of $\dot{x}$ = 0.0119 m s$^{-1}$ and at velocities consistent with laminar flow, the damper rate is c = 77.6 N s m$^{-1}$.

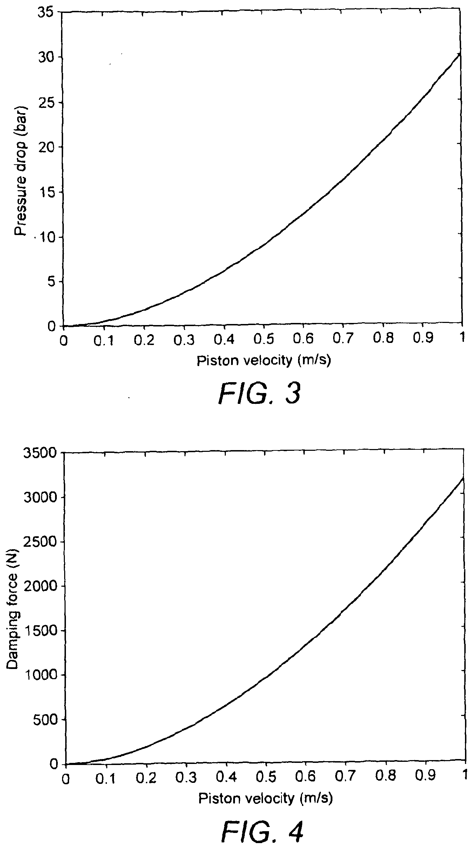

The pressure drop and linear force in conditions of turbulent flow are shown in Figure 3 and Figure 4, respectively.

If $r_1$, $r_2$ and $r_3$ are all increased by a factor of 2 and $l$ is reduced by a factor of 4 and then $m_{hel}$ and $b$ are left unchanged, $m_{cyl}$ is increased by a factor of 4 and the damping force in turbulent flow is reduced by a factor of $2^{1.25} = 2.38$.

Alternative configurations for the hydraulic means are equally feasible. The helical tube shown in Figure 1 may be replaced in other embodiments of the invention with different shaped tubes. Furthermore, the liquid path may be provided inside the cylinder, with the piston being shaped to provide for example a helical liquid flow path or several concentric helices. Clearances around the piston may also be employed to provide the flow path inside the cylinder. In practice, the best results appear to be achieved by a helical flow path.

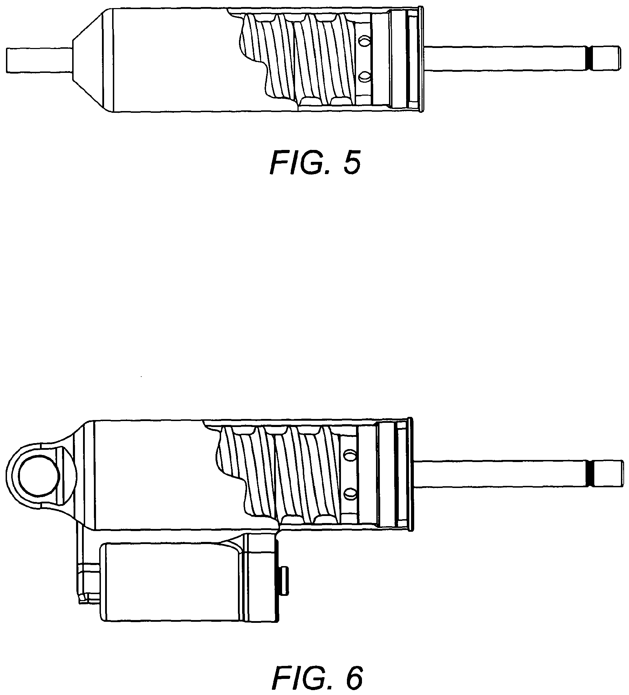

Figure 5 shows a fluid inerter with helical channel on the outer surface of the piston whose cross-section is a semi-disk and a through-rod arranged as in the schematic of Figure 2. Figure 6 shows a fluid inerter with helical channel on the outer surface of the piston, a single rod as in a standard telescopic damper and a pressurised gas reservoir.

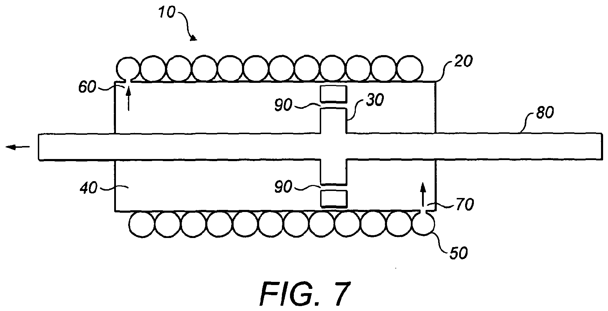

Figure 7 illustrates an example of a force-controlling hydraulic device 10. As in the device of Figure 1 , the device 10 comprises a cylinder 20, a piston 30 movable within the cylinder, and a liquid 40 within the cylinder 20. The device further comprises a helical tube 50 located outside the cylinder 20 creating a sealed path for the liquid 40 to flow out and back into the cylinder 20 via two orifices (60, 70). Accordingly, the two orifices (60, 70) represent a basic means for controlling the liquid flow in the helical tube 50. It will be appreciated that the means for controlling the liquid flow may have alternative configurations. These include for example electronic valves, computer controlled flow valves, or magnetic field generators for use with a magnetorheological fluid as will be described in more details below. Unlike the device of Figure 1 , the piston 30 according to the present invention is provided with damping means in the form of orifices 90.

Movement of the piston 30 causes liquid 40 to flow through the orifices 90 (a first flow path), generating a damping force, as well as through the helical tube 50 (a second flow path) which generates an inertial force due to the moving mass of the liquid 40. In this arrangement, the pressure drop across the external helical tube 50 is the same as the pressure drop across the piston 30. This pressure drop multiplied by the piston area is equal to the force experienced at the terminals. Accordingly, the first and second flow paths are hydraulically coupled, producing a damper coupled in series with an inerter. It will be appreciated that, instead of orifices 90, other damping means as used in conventional hydraulic dampers may be employed.

Figure 8 schematically represents the equivalent circuit of the liquid series damper-inerter shown in Figure 7. This circuit comprises the inerter 300 produced by the liquid 40 flowing through the helical tube 50, the parasitic (non-linear parallel damping) 200 caused by the viscous effects due to the liquid 40 through the helical tube 50, and the damper 600 produced by orifices 90 or similar damping means.

As will be described below, variations and additions to the arrangement shown in Figure 7 are possible in practice.

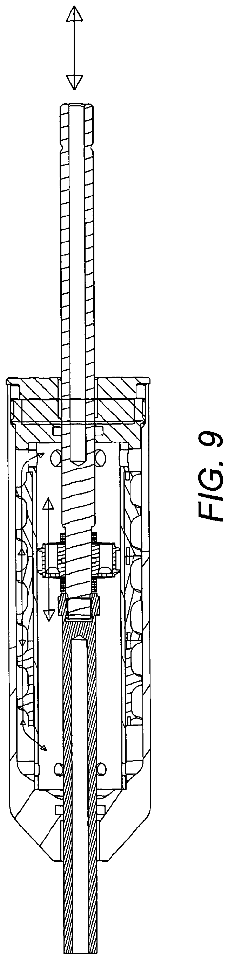

Figure 9 illustrates an example of a force-controlling hydraulic device. The device has a twin-tube arrangement for the construction of the external helical path and a shaft mounted damping piston. The device provides two fluid flow paths through or around the piston during compression, or extension. The movement of the piston is by-directional within the cylinder. Standard types of damper shaft, piston, and shim arrangements may be used.

A first flow path is provided through the shaft mounted damping piston. The first flow path is the traditional flow of liquid through shims, or an orifice in the main shaft piston yielding damping forces. A second helical flow path is hydraulically coupled in series with the first flow path. The helical flow path forces the liquid into spinning motion and the inertia of the rotating fluid provides inertance. The flow through the helical path also provides viscous damping.

Because both paths are hydraulically coupled, this arrangement yields a series force connection as the pressures are equalized across either path. The pressure differential across the main shaft piston translate into forces to resist, (or promote) the movement of the shaft.

The device shown in Figure 9 is a through-rod damper version in which the shaft continues past the piston, and travels outside of the opposite side of the damper. This prevents any liquid from being displaced, and eliminates the need for a reservoir to accept displaced liquid. However, if any temperature increases are expected, a thermal expansion reservoir is typically needed. The inside-out version is a possibility, with the helical path contained within the piston and an external liquid path restricted by a fixed piston with orifices. In this arrangement, another piston with orifices attached to the through-rod achieves further damping in parallel to that obtained in the helical path and provides a means to modify the parasitic damping.

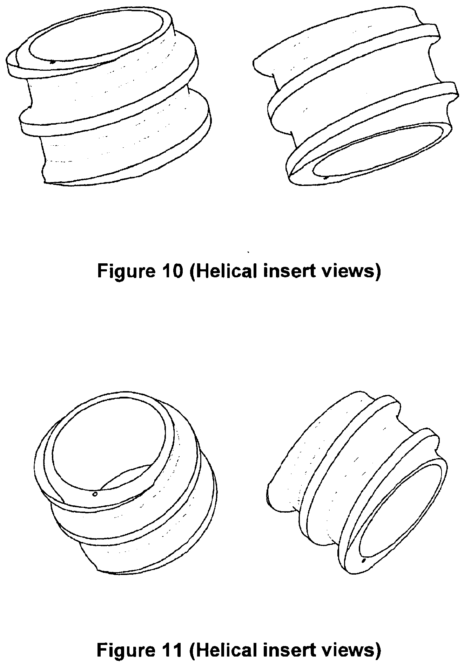

Multiple helical inserts can be added or removed to increase or decrease the length of helical flow path, making the magnitude of the inertance effect adjustable. Figures 10 and 11 show the helical inserts that could be stacked in the secondary flow path of the devices in Figure 9 to add or subtract from the length of the helical flow path, and thus increase, or decrease the inertance. The inserts may be oriented using pins, or slots to align the helical path. This is particularly useful in development or devices used in racing cars.

Although the use of helical inserts has been shown and described, other examples include yet other means for imparting swirl to the fluid. Such swirling means include as one example a plurality of discrete, separated vanes extending semi-or fully helically in the second flow passage. Such vanes could be placed on either the inner diameter of the pressure vessel, or the outer diameter of the piston cylindrical flowpath. It is understood that it may not be necessary to provide a full, three hundred sixty degrees of fluid guidance, especially for dense and/or viscous fluids, including as one example MR fluid.

Referring again to Figure 9, it can be seen that the inner tube in which the piston traverses has formed in it at either end one or more orifices. Some of these orifices may have placed within them one-way valves, such as check valves that provide substantially free flow of fluid in one direction, but that substantially obstruct the flow of fluid in the other direction.

Further, yet other examples include valves similar to the shimmed one-way valves commonly found in shock absorber pistons that provide a flow opening that varies as a function of pressure drop. In the examples thus described, the one-way valves act to provide an inertial component to damping that depends upon the direction of fluid flow. In such examples it is possible to have, as one example, relatively lighter inertial effects during jounce, and more significant inertial effects during rebound. As yet another example, the valving can be configured to provide less inertial effects at lower pressure drops across the main, stroking piston, and increased inertial effects at higher pressure drops across the stroking piston.

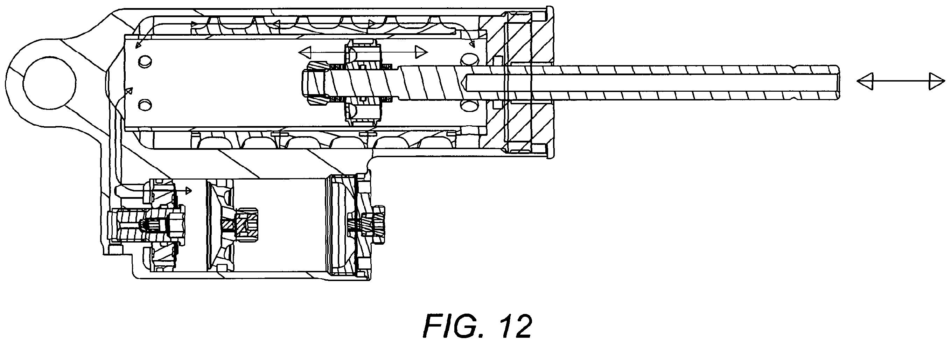

Figure 12 illustrates another example of a force-controlling hydraulic device. This device includes a more traditional damper, having a reservoir to accept the shaft displaced liquid, and any heat expansion of the damping liquid. This single-acting rod arrangement uses an external chamber with a floating piston, as in conventional damper technology. This provides a convenient means to pressurize the device. A typical damper reservoir with or without a head-valve piston is used to accept the shaft displaced liquid, and maintain positive pressure in the damper. A pressurized gas reservoir is provided.

In some examples a helical insert of the type shown in figures 10 and 11 can be inserted into the reservoir between the head valve and the floating piston. Such a helical insert in the reservoir can be in place of or adjunct with the helical flow path surrounding the piston in the main cylinder.

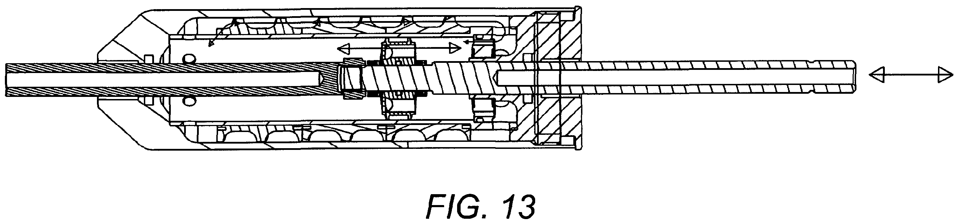

Figure 13 illustrates another example of a force-controlling hydraulic device. The device is a through-rod version which in which a two-way damping piston has been added in line with the external helical fluid path to provide some additional controllable damping at lower speeds.

FIGS. 9, 12, 13 and 22 to 24 show fluid shock absorbers. In the comments that follow, it is appreciated that some of the statements may pertain to all of the examples shown in FIGS. 9, 12, 13 and 22 to 24, and that other comments apply to fewer than all of the examples shown in FIGS. 9, 12, 13 and 22 to 24. These and other figures include text which further describes the particular examples.

There is an inner housing having two ends and a cylindrical inner wall. There is a piston slidable within the inner wall, the piston having two sides and coacting with the inner wall to define a first fluid volume from one side to one end and to define a second fluid volume from the other side to the other end, the piston having thereacross a first fluid passage from the one side to the other side. There is an outer housing receiving therein the inner housing, outer housing and inner housing defining a second fluid passage in fluid communication with both the first volume and the second volume, the second fluid passage curving circumferentially the outside of the inner wall. In some embodiments, the second fluid passage curves circumferentially at least about one revolution.

The outer housing has generally cylindrical inner and outer surfaces and the inner housing has generally cylindrical inner and outer surfaces. The outer housing and the inner housing define a generally annular volume therebetween, and the second fluid passage is through the annular volume.

Some examples also include a separate cylindrical member placed between the inner housing and the outer housing, the member including a groove extending at least one revolution about the cylindrical axis of the member, the groove coacting with at least one of the inner housing or the outer housing to define the second fluid passage. The cylindrical member can be repeatedly removable from the shock absorber. The second fluid passage comprises a plurality of the cylindrical members.

The groove of each member can be helical having an entrance and an exit, and the exit of the one cylindrical member is aligned to provide fluid to the entrance of the adjacent the cylindrical member.

The second fluid passage curves circumferentially around the inner housing a plurality of revolutions, the second passage being adapted and configured to substantially increase the angular momentum of fluid flowing therethrough. The second fluid passage can be generally spirally shaped.

The fluid flowing from one of the first volume or second volume to the other of the first volume or second volume through the second passage can be substantially confined within the helical shape.

The second fluid passage provides a flow characteristic substantially related to the inertia of the fluid flowing therethrough with relatively little viscous pressure drop, and the first pressure drop provides a flow characteristic substantially related to the velocity and viscosity of the fluid flowing therethrough. In some examples the viscous pressure drop of the second passage is substantially less than the viscous pressure drop of the first passage.

The first fluid passage includes a valve having a predetermined fluid flow characteristic for fluid flowing from the one side to the other side. Some examples also include a valve providing fluid communication from one of the first volume or the second volume to the third volume, the valve having a first predetermined fluid flow characteristic for fluid flowing into a third volume, and a second, different predetermined fluid flow characteristic for fluid flowing out of the third volume.

The outer housing includes a first attachment feature, the rod includes a second attachment feature, each attachment feature being adapted and configured for coupling to different components of a vehicle suspension. Some examples also include a rod having two ends, with one end being fixedly coupled to the piston and the other end extending out of the outer housing.

The fluid can be hydraulic fluid or a magnetorheological (MR) fluid. MR fluids typically contain iron particles in suspension and are therefore very dense, providing greater inertial effects as well as the possibility to adjust the viscosity by the application of a magnetic field.

The helical inserts of Figures 10 and 11 could be stacked in the secondary flow path of the devices in Figures 12 and 13 to add or subtract from the length of the helical flow path. Figure 13 shows an example in which three sets of helical inserts (each shown in cross-section) are pinned together at their opposing faces.

It will be appreciated that the helical tube shown in Figure 7 may be replaced in other examples of the invention with different shaped tubes. Furthermore, as shown in Figures 2, 5 and 6, the liquid path may be provided inside the cylinder, with the piston being shaped to provide for example a helical flow path or several concentric helices. Clearances around the piston may also be employed to provide the flow path inside the cylinder. In practice, the best results appear to be achieved by a helical flow path. In other embodiments, it is possible to include both liquid paths within the piston such as a helical path built in a shaft assembly.

Furthermore, multiple starts and varying section geometries are envisaged for the outer helical path in a device according to the present invention. The smaller geometry helix would be "cut out" with viscous damping at an earlier stage, then leaving the larger section to produce inertance.

Figures 22 to 24 illustrate several options for controlling the flow of the liquid through the helical (second) path. In the example of Figures 22 to 24, the helical path is routed through a bi-directional piston to control the inertial flow. In the embodiments of Figures 22 to 24, a pressurised gas reservoir is used to pressurize the system and allow for heat expansion, however, it is also possible to use a through-rod arrangement in which there is no displaced fluid from the damper to be accommodated by the gas reservoir.

An externally adjustable inertance is envisaged for a device in which the inner tube of the device is axially adjustable in relation to the helical path providing the first flow path. When moved, this would set the starting point of the helical column of fluid effectively adding or removing portions of the helical path, and hence changing the inertance.

Figure 23 shows where external adjusters are used to control the flow in the damping and inertial paths, respectively. Adjusters may be any type of bleed, blowoff, shim preload, or other type of adjuster.

Furthermore, as shown in Figure 24, it is possible to use computer controlled bypass valves to work in conjunction with the layout according to the present invention. A computer controlled valve could be used to control bypass flow around the helical path, but might also be able to separately control the inertance by controlling the flow through the helical path.

When an MR fluid is used in an embodiment as shown in Figure 24, it is possible to adjust its viscosity by a magnetic field. Magnetic field generators could be used to vary the damping characteristic in the first and or the second flow path.

Devices according to the present invention may be installed for example inside a motorcycle fork or inside an automobile strut to provide motion control.

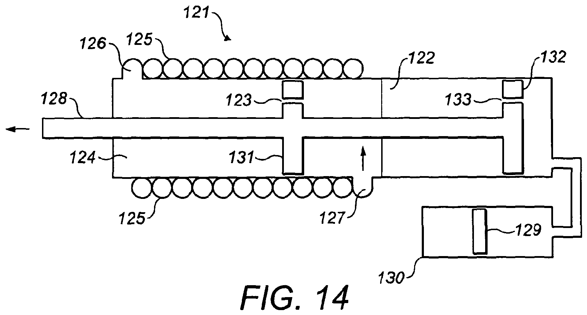

It will be appreciated that integrated devices involving devices according to the present invention can be made. Three examples in Figures 14, 16, and 18 are now given in which another device acts in parallel with a device according to the present invention.

Figure 14 shows a series damper-inerter in parallel with a damper 121. The device comprises two separate fluid chambers 124 and 122. The device is equipped with a rod 128 which acts as a through-rod in the chamber 124. Pistons 131 and 132 are attached to the rod. The chamber 124 provides the operation of a device of the type 10 (shown in Figure 7) which comprises an external fluid-filled helical path 125, inlet and outlet ports 126 and 127 and an orifice 123 in the piston 131. The helical path 125 provides the inerter effect (first flow path) and the orifice 123 provides the damper in series (second flow path). The second chamber 122 provides a parallel damper by means of the orifice 133 in the piston 132. The chamber 122 is equipped with an external chamber 130 and floating piston 129 to accommodate fluid displaced by the rod. This chamber may also serve to pressurise the device.

Figure 15 shows the circuit diagram for the device according to Figure 14 comprising a damper 161 in parallel with the series connection of a damper 162 and inerter 163. Any parasitic damping from the helical path or damping deliberately introduced would act in parallel with the inerter element alone.

Figure 16 shows a series damper-inerter in parallel with an inerter 141. The device comprises two separate fluid chambers 144 and 142. The device is equipped with a rod 148 which acts as a through-rod in the chamber 144. Pistons 151 and 152 are attached to the rod. The chamber 144 provides the operation of a device of the type 10 (shown in Figure 7) which comprises an external fluid-filled helical path 145, inlet and outlet ports 146 and 147 and an orifice 143 in the piston 151. The helical path 145 provides the inerter effect (first flow path) and the orifice 143 provides the damper in series (second flow path). The second chamber 142 provides a parallel inerter by means of the external helical path 155. The chamber 142 is equipped with an external chamber 150 and floating piston 149 to accommodate fluid displaced by the rod. This chamber may also serve to pressurise the device.

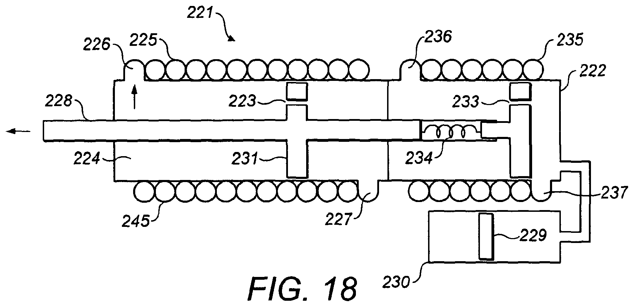

Figure 17 shows the circuit diagram for the device according to Figure 16 comprising an inerter 181 in parallel with the series connection of a damper 182 and inerter 183. Any parasitic damping from the helical paths or damping deliberately introduced would act in parallel with the inerter elements.

Figure 18 shows a series damper-inerter in parallel with a series connection of a spring damper and inerter 221. The device comprises two separate fluid chambers 224 and 222. The device is equipped with a rod 228 which acts as a through-rod in the chamber 224. Piston 231 is attached to the rod 228. Spring-loaded piston 232 is slidably attached to the rod 228 by the spring 234. The chamber 224 provides the operation of a device of the type 10 (shown in Figure 7) which comprises an external fluid-filled helical path 225, inlet and outlet ports 226 and 227 and an orifice 223 in the piston 231. The helical path 225 provides the inerter effect (first flow path) and the orifice 223 provides the damper in series (second flow path). The second chamber 222 provides in parallel a series inerter-spring-damper by means of the external helical path 235, the spring-loaded piston 232 and the orifice 233 in the piston. The chamber 222 is equipped with an external chamber 230 and floating piston 229 to accommodate fluid displaced by the rod. This chamber may also serve to pressurise the device.

Figure 19 shows the circuit diagram for the device according to Figure 18 comprising a series connection of a damper 241 and inerter 242 in parallel with a series connection of a spring 243 damper 244 and inerter 245. Any parasitic damping from the helical path or damping deliberately introduced would act in parallel with the inerter elements alone.

Figure 20 shows a device 321. The device 321 comprises a cylinder 322, a rod 328 movable within the cylinder, and a fluid 324 within the cylinder 322. There is provided a piston 331 fixed to the rod 328 with an orifice 323 and a further spring-loaded piston 332 slidably attached to the rod 328. The device further comprises a helical tube 325 located outside the cylinder 322 creating a sealed path for the fluid to flow out and back into the cylinder 322 via two orifices (326, 327). Movement of the rod causes fluid 324 to flow through helical tube 325 which generates an inertial force due to the moving mass of the fluid 324. As in the device of Figure 7, the piston 331 is provided with damping means in the form of the orifice 323. The second spring-loaded piston 332 provides the effect of a spring in parallel. The device 321 is equipped with an external chamber 329 and floating piston 330 to accommodate fluid displaced by the rod. This chamber may also serve to pressurize the device.

Figure 21 shows the circuit diagram for the device according to Figure 20 comprising the connection of an inerter 341 in series with a parallel connection of a spring 342 and damper 343.

## Claims

1. A device (10) for use in the control of mechanical forces, the device comprising:

   first and second terminals for connection, in use, to components in a system for controlling mechanical forces and independently moveable; and
   hydraulic means (20, 30) connected between the terminals and containing a liquid (40), the hydraulic means configured, in use, to produce upon relative movement of the terminals, a liquid flow along at least two flow paths; wherein
   the liquid flow along a first flow path (90) generates a damping force proportional to the velocity of the liquid flow along the first flow path; and
   the liquid flow along a second flow path (50) generates an inertial force due to the mass of the liquid, the force being proportional to the acceleration of the liquid flow along the second flow path;
   such that the damping force is equal to the inertial force to provide an inerter in series with a damper and controls in use, the mechanical forces at the terminals wherein the hydraulic means further comprises:

   a housing (20) defining a chamber for containing the liquid (40), the housing being attached to one of the terminals; and
   a piston (30) attached to the other terminal and movable within the chamber such that the movement of the piston causes the liquid to flow along the first flow path (90) and the second flow path (50).

2. A device (10) according to claim 1, wherein the first flow path (90) is provided through the piston (30).

3. A device (10) according to claim 1 or 2, wherein the first flow path (90) is provided outside the chamber.

**4.** A device (10) according to claim 1 or 2, wherein the second flow path (50) is provided outside the chamber.

**5.** A device (10) according to claim 1 or 2, wherein the second flow path (50) is provided inside the chamber.

**6.** A device (10) according to any preceding claim, wherein the second flow (50) path is helical.

**7.** A device (10) according to any preceding claim, further comprising means for controlling the pressure along the first flow path (90).

**8.** A device (10) according to any preceding claim, wherein the size of the first flow path (90) is adjustable.

**9.** A device (10) according to any preceding claim, wherein the length of the second flow path (50) is adjustable.

**10.** A device (10) according to any preceding claim, further comprising means to restrict the extent of the relative movement of the two terminals.

**11.** A device (10) according to any preceding claim, further comprising means to control the flow along the first flow path (90).

**12.** A device (10) according to any preceding claim, further comprising means to control the flow along the second flow path (50).

**13.** A device (10) according to claim 11 or 12, wherein the means to control the flow is a computer-controlled valve.

**14.** A device (10) according to claim 11, wherein the means to control the flow include external means for adjusting the length of the second flow path (50).

**15.** A device (10) according to claim 11 or 12, wherein the liquid (40) is a magnetorheological liquid and wherein the means to control the flow are means for magnetorheological fluid control.

**16.** A system comprising at least one device (10) according to any preceding claim, connected with at least one of a spring, or damper, or further device according to any preceding claim, integrated with one another.

**17.** A system according to claim 16, wherein the said at least one device (10) is connected in series with a first damper to form a series damper-inerter and the series damper-inerter is connected in parallel with a second damper.

**18.** A system according to claim 16, wherein the said at least one first device (10) is connected in series with a damper to form a series damper-inerter and the series damper-inerter is connected in parallel with a second device according to any of claims 1 to 16.

**19.** A system according to claim 16, wherein:

the said at least one first device (10) is connected in series with a first damper to form a first series damper-inerter;
a second device (10) according to any of claims 1 to 15 is connected in series with a second damper to form a second damper-inerter; and
the first series damper-inerter is connected in parallel with the second damper-inerter.

**20.** A system according to claim 16, wherein a spring is connected in parallel with a damper to form a parallel spring-damper and the parallel spring damper is connected in series with the said at least one device (10).

**21.** A mechanical damping system, such as a system within a car suspension, a railway suspension, or a motorcycle suspension, comprising a device (10) according to any of claims 1 to 15.

**22.** A mechanical damping system according to claim 21, wherein the device (10) is configured such that neither of the two terminals is connected to a fixed point.

**23.** A method for vibration absorption, the method comprising the step of employing a device (10) according to claims 1 to 15.

**Patentansprüche**

1. Vorrichtung zur Verwendung (10) bei der Regelung mechanischer Kräfte, wobei die Vorrichtung Folgendes umfasst:

   einen ersten und einen zweiten Anschluss zum Koppeln, in Gebrauch, mit Komponenten in einem System zum Regeln mechanischer Kräfte, die unabhängig voneinander beweglich sind; und
   Hydraulikmittel (20, 30), die zwischen den Anschlüssen angeschlossen sind und eine Flüssigkeit (40) enthalten wobei die Hydraulikmittel dazu konfiguriert sind, in Gebrauch bei relativer Bewegung der Anschlüsse einen Flüssigkeitsstrom entlang mindestens zwei Strömungswegen zu erzeugen, wobei
   der Flüssigkeitsstrom entlang einem ersten Strömungsweg (90) eine Dämpfungskraft erzeugt, die proportional zur Geschwindigkeit des Flüssigkeitsstroms entlang dem ersten Strömungsweg ist; und
   der Flüssigkeitsstrom entlang einem zweiten Strömungsweg (50) eine Trägheitskraft infolge der Masse der Flüssigkeit erzeugt, wobei die Kraft proportional zur Beschleunigung des Flüssigkeitsstroms entlang dem zweiten Strömungsweg ist;
   sodass die Dämpfungskraft gleich der Trägheitskraft ist, um einen Inerter in Reihe mit einem Dämpfer bereitzustellen, und in Gebrauch die mechanischen Kräfte an den Anschlüssen regelt, wobei die Hydraulikmittel weiter Folgendes umfassen:

   ein Gehäuse (20), das eine Kammer zum Aufnehmen der Flüssigkeit (40) definiert, wobei das Gehäuse an einem der Anschlüsse angebracht ist; und
   einen Kolben (30), der an dem anderen Anschluss angebracht ist und innerhalb der Kammer beweglich ist, sodass die Bewegung des Kolbens die Flüssigkeit veranlasst, entlang dem ersten Strömungsweg (90) und dem zweiten Strömungsweg (50) zu strömen.

2. Vorrichtung (10) nach Anspruch 1, wobei der erste Strömungsweg (90) durch den Kolben (30) hindurch bereitgestellt ist.

3. Vorrichtung (10) nach Anspruch 1 oder 2, wobei der erste Strömungsweg (90) außerhalb der Kammer bereitgestellt ist.

4. Vorrichtung (10) nach Anspruch 1 oder 2, wobei der zweite Strömungsweg (50) außerhalb der Kammer bereitgestellt ist.

5. Vorrichtung (10) nach Anspruch 1 oder 2, wobei der zweite Strömungsweg (50) innerhalb der Kammer bereitgestellt ist.

6. Vorrichtung (10) nach einem der vorangehenden Ansprüche wobei der zweite Strömungsweg (50) spiralförmig ist.

7. Vorrichtung (10) nach einem der vorangehenden Ansprüche, weiter umfassend Mittel zum Regeln des Drucks entlang dem ersten Strömungsweg (90).

8. Vorrichtung (10) nach einem der vorangehenden Ansprüche wobei die Größe des ersten Strömungswegs (90) verstellbar ist.

9. Vorrichtung (10) nach einem der vorangehenden Ansprüche wobei die Länge des zweiten Strömungswegs (50) verstellbar ist.

10. Vorrichtung (10) nach einem der vorangehenden Ansprüche, weiter umfassend Mittel zum Einschränken des Ausmaßes der Relativbewegung der zwei Anschlüsse.

11. Vorrichtung (10) nach einem der vorangehenden Ansprüche, weiter umfassend Mittel zum Regeln des Stroms entlang dem ersten Strömungsweg (90).

12. Vorrichtung (10) nach einem der vorangehenden Ansprüche, weiter umfassend Mittel zum Regeln des Stroms entlang dem zweiten Strömungsweg (50).

13. Vorrichtung (10) nach Anspruch 11 oder 12, wobei es sich bei den Mitteln zum Regeln des Stroms um ein computergesteuertes Ventil handelt.

**14.** Vorrichtung (10) nach Anspruch 11, wobei die Mittel zum Regeln des Stroms externe Mittel zum Verstellen der Länge des zweiten Strömungswegs (50) umfassen.

**15.** Vorrichtung (10) nach Anspruch 11 oder 12, wobei es sich bei der Flüssigkeit (40) um eine magnetorheologische Flüssigkeit handelt und wobei es sich bei den Mitteln zum Regeln des Stroms um Mittel zur magnetorheologischen Fluidregelung handelt.

**16.** System, umfassend mindestens eine Vorrichtung (10) nach einem der vorangehenden Ansprüche, gekoppelt mit mindestens einem von einer Feder oder einem Dämpfer oder einer weiteren Vorrichtung nach einem der vorangehenden Ansprüche, die miteinander integriert sind.

**17.** System nach Anspruch 16, wobei die mindestens eine Vorrichtung (10) mit einem ersten Dämpfer in Reihe gekoppelt ist, um einen Reihen-Dämpfer-Inerter zu bilden, und der Reihen-Dämpfer-Inerter mit einem zweiten Dämpfer parallel gekoppelt ist.

**18.** System nach Anspruch 16, wobei die mindestens eine Vorrichtung (10) mit einem Dämpfer in Reihe gekoppelt ist, um einen Reihen-Dämpfer-Inerter zu bilden, und der Reihen-Dämpfer-Inerter mit einer zweiten Vorrichtung nach einem der Ansprüche 1 bis 16 parallel gekoppelt ist.

**19.** System nach Anspruch 16, wobei:

die mindestens eine Vorrichtung (10) mit einem ersten Dämpfer in Reihe gekoppelt ist, um einen ersten Reihen-Dämpfer-Inerter zu bilden;
eine zweite Vorrichtung (10) nach einem der Ansprüche 1 bis 15 mit einem zweiten Dämpfer in Reihe gekoppelt ist, um einen zweiten Dämpfer-Inerter zu bilden; und
der erste Reihen-Dämpfer-Inerter mit dem zweiten Dämpfer-Inerter parallel gekoppelt ist.

**20.** System nach Anspruch 16, wobei eine Feder mit einem Dämpfer parallel gekoppelt ist, um einen Parallel-Feder-Dämpfer zu bilden, und der Parallel-Feder-Dämpfer mit der mindestens einen Vorrichtung (10) in Reihe gekoppelt ist.

**21.** Mechanisches Dämpfungssystem, wie etwa ein System in einer Fahrzeugfederung, einer Eisenbahnaufhängung oder einer Motorradfederung, umfassend eine Vorrichtung (10) nach einem der Ansprüche 1 bis 15.

**22.** Mechanisches Dämpfungssystem nach Anspruch 21, wobei die Vorrichtung (10) derart konfiguriert ist, dass keiner der beiden Anschlüsse an einen festen Punkt gekoppelt ist.

**23.** Verfahren zur Schwingungsabsorption, wobei das Verfahren den Schritt des Einsetzens einer Vorrichtung (10) nach Ansprüchen 1 bis 15 umfasst.

**Revendications**

**1.** Dispositif (10) utilisable pour la commande de forces mécaniques, le dispositif comportant:

un premier et un deuxième terminaux à raccorder, en cours d'usage, à des éléments dans un système servant à contrôler des forces mécaniques et indépendamment déplaçables; et
un moyen hydraulique (20, 30) raccordé entre les terminaux et contenant un liquide (40), le moyen hydraulique étant configuré, en cours d'usage, de manière à produire, dès que survient un mouvement relatif des terminaux, l'écoulement du liquide le long d'au moins deux chemins d'écoulement; **caractérisé en ce que**
l'écoulement du liquide le long d'un premier chemin d'écoulement (90) produit une force d'amortissement qui est proportionnelle à la vitesse d'écoulement du liquide le long du premier chemin d'écoulement; et
l'écoulement du liquide le long d'un deuxième chemin d'écoulement (50) produit une force d'inertie en raison de la masse du liquide, la force étant proportionnelle à l'accélération du liquide le long du deuxième chemin d'écoulement;
de telle manière que la force d'amortissement est égale à la force d'inertie donnant ainsi un système d'inertie qui est en série avec un amortisseur, et contrôle en cours d'usage, les forces mécaniques eu niveau des terminaux, **caractérisé en ce que** le moyen hydraulique comporte par ailleurs:

un carter (20) qui définit une chambre servant à contenir le liquide (40), le carter étant attaché à l'un des terminaux; et

un piston (30) attaché à l'autre terminal et déplaçable à l'intérieur de la chambre de sorte que le mouvement du piston provoque l'écoulement du liquide le long du premier chemin d'écoulement (90) et du deuxième chemin d'écoulement (50).

2. Dispositif (10) selon la revendication 1, **caractérisé en ce que** le premier chemin d'écoulement (90) est prévu à travers le piston (30).

3. Dispositif (10) selon la revendication 1 ou 2, **caractérisé en ce que** le premier chemin d'écoulement (90) est prévu à l'extérieur de la chambre.

4. Dispositif (10) selon la revendication 1 ou 2, **caractérisé en ce que** le deuxième chemin d'écoulement (50) est prévu à l'extérieur de la chambre.

5. Dispositif (10) selon la revendication 1 ou 2, **caractérisé en ce que** le deuxième chemin d'écoulement (50) est prévu à l'intérieur de la chambre.

6. Dispositif (10) selon l'une quelconque des revendications précédentes, **caractérisé en ce que** le deuxième chemin d'écoulement (50) est hélicoïdal.

7. Dispositif (10) selon l'une quelconque des revendications précédentes, comportant par ailleurs un moyen de contrôler la pression le long du premier chemin d'écoulement (90).

8. Dispositif (10) selon l'une quelconque des revendications précédentes, **caractérisé en ce que** la grandeur du premier chemin d'écoulement (90) est ajustable.

9. Dispositif (10) selon l'une quelconque des revendications précédentes, **caractérisé en ce que** la longueur du deuxième chemin d'écoulement (50) est ajustable.

10. Dispositif (10) selon l'une quelconque des revendications précédentes, comportant par ailleurs un moyen qui limite le degré de mouvement relatif des deux terminaux.

11. Dispositif (10) selon l'une quelconque des revendications précédentes, comportant par ailleurs un moyen de contrôler le débit le long du premier chemin d'écoulement (90).

12. Dispositif (10) selon l'une quelconque des revendications précédentes, comportant par ailleurs un moyen de contrôler le débit le long du deuxième chemin d'écoulement (50).

13. Dispositif (10) selon la revendication 11 ou 12, **caractérisé en ce que** le moyen de contrôler le débit est une soupape commandée par ordinateur.

14. Dispositif (10) selon la revendication 11, **caractérisé en ce que** le moyen de contrôler le débit comprend un moyen extérieur servant à ajuster la longueur du deuxième chemin d'écoulement (50).

15. Dispositif (10) selon la revendication 11 ou 12, **caractérisé en ce que** le liquide (40) est un liquide magnéto-rhéologique et **en ce que** le moyen de contrôler le débit est un moyen de contrôler le fluide magnéto-rhéologique.

16. Système comprenant au moins un dispositif (10) selon l'une quelconque des revendications précédentes, connecté au moins à un ressort, ou un amortisseur ou bien à un autre dispositif selon l'une quelconque des revendications précédentes, qui sont intégrés les uns avec les autres.

17. Système selon la revendication 16, **caractérisé en ce que** le dispositif (10) prévu en au moins un exemplaire est connecté en série avec un premier amortisseur pour former un amortisseur-système d'inertie en série en **en ce que** l'amortisseur-système d'inertie en série est connecté en parallèle avec un deuxième amortisseur.

18. Système selon la revendication 16, **caractérisé en ce qu'**au moins le premier dispositif (10) est connecté en série avec un amortisseur pour former un amortisseur-système d'inertie en série et **en ce que** l'amortisseur-système d'inertie en série est connecté en parallèle avec un deuxième dispositif selon l'une quelconque des revendications 1 à 16.

19. Système selon la revendication 16, **caractérisé en ce que**:

le premier dispositif (10) prévu en au moins un exemplaire est connecté en série avec un premier amortisseur pour former un premier amortisseur-système d'inertie en série;
un deuxième dispositif (10) selon l'une quelconque des revendications 1 à 15 est connecté en série avec un deuxième amortisseur pour former un deuxième amortisseur-système d'inertie en série; et
le premier amortisseur-système d'inertie en série est connecté en parallèle avec le deuxième amortisseur-système d'inertie.

20. Système selon la revendication 16, **caractérisé en ce qu'**un ressort est raccordé en parallèle avec un amortisseur pour former un ressort-amortisseur parallèle et **en ce que** le ressort-amortisseur parallèle est raccordé en série avec le dispositif (10) prévu en au moins un exemplaire.

21. Système d'amortissement mécanique, comme par exemple un système dans une suspension automobile, une suspension de wagon ferroviaire, ou une suspension de motocyclette, comprenant un dispositif (10) selon l'une quelconque des revendications 1 à 15.

22. Système d'amortissement mécanique selon la revendication 21, **caractérisé en ce que** le dispositif (10) est configuré de manière à ce que ni l'un ni l'autre des deux terminaux ne se trouve raccordé à un point fixe.

23. Procédé d'absorption des vibrations, le procédé consistant à employer un dispositif (10) selon les revendications 1 à 15.

FIG. 1

FIG. 2

FIG. 3

FIG. 4

FIG. 5

FIG. 6

FIG. 7

*FIG. 9*

Figure 10 (Helical insert views)

Figure 11 (Helical insert views)

*FIG. 12*

*FIG. 13*

FIG. 14

FIG. 16

FIG. 18

**FIG. 20**

*FIG. 22*

*FIG. 23*

29

*FIG. 24*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7316303 B
- DE 19834316 C
- EP 2060823 A